# FASCICULE DE BREVET EUROPEEN

(11) **EP 0 442 763 B1**
(45) Date de publication et mention de la délivrance du brevet: **27.10.1993**
(21) Numéro de dépôt: 91400016.1
(22) Date de dépôt: 04.01.1991
(51) Int. Cl.: F16F 13/00

(54) **Articulation hydroélastique à armatures concentriques**
Hydroelastisches Gelenk mit konzentrischen Armaturen
Hydroelastic joint with concentric mounting elements

(30) Priorité: 15.02.1990 FR 9001837
(43) Date de publication de la demande: 21.08.1991
(73) Titulaire: AUTOMOBILES PEUGEOT, 75116 Paris (FR); AUTOMOBILES CITROEN, 92200 Neuilly-sur-Seine (FR)
(72) Inventeur: Le Fol, Marcel, F-35410 DOMLOUP (FR); Poupard, Dominique, F-92370 CHAVILLE (FR)
(74) Mandataire: Moncheny, Michel

(56) Documents cités:
- US-A- 4 738 435
- PATENT ABSTRACTS OF JAPAN vol. 9, no. 268 (M-424)() 25 octobre 1985, & JP-A-60 113836 (TOYOTA JIDOSHA KK) 20 juin 1985,
- PATENT ABSTRACTS OF JAPAN vol. 11, no. 120 (M-580)(2567) 15 avril 1987, & JP-A-61 262244 (BRIDGESTONE CORPORATION) 20 novembre 1987,

## Description

La présente invention concerne une articulation élastique utilisée notamment dans l'industrie automobile et destinée à amortir principalement des efforts radiaux, c'est-à-dire exercés sensiblement perpendiculairement à l'axe de l'articulation. Un exemple d'articulation connue correspondant à la définition donnée dans le préambule de la revendication 1, peut être trouvé dans le document JP-A-60-113 836 qui décrit une articulation comprenant deux armatures tubulaires concentriques, respectivement intérieure et extérieure, reliées par une masse d'un matériau élastique qui délimite deux chambres contenant un liquide et dissymétriques par rapport à l'axe des armatures. Les deux chambres sont mises en communication par plusieurs canaux, disposés en parallèle et dotés d'un dispositif à clapet permettant d'ouvrir ou de fermer au moins l'un desdits canaux.

Un tel agencement est relativement compliqué compte tenu de la présence du dispositif à clapet d'obturation. Sa fiabilité peut donc en être affectée. Par ailleurs, il ne permet pas d'obtenir un filtrage très efficace des vibrations à haute fréquence.

L'invention se propose de fournir une articulation hydroélastique permettant d'obtenir un meilleur effet de filtrage des vibrations à haute fréquence, tout en étant de construction simple et robuste.

A cet effet, l'invention a pour objet une articulation hydroélastique, comprenant deux armatures concentriques, sensiblement coaxiales, constituant respectivement une armature extérieure et une armature intérieure, ces deux armatures étant reliées par une masse de matériau élastique, une cloison rigide portée par l'une des armatures, qui s'étend sensiblement perpendiculairement à l'axe des armatures et délimite au moins un conduit, l'articulation comportant deux chambres remplies de liquide, une chambre de travail et une chambre d'expansion qui communiquent à travers ledit conduit, la chambre de travail occupant une partie de l'intervalle entre les deux armatures et étant dissymétriques par rapport à l'axe des armatures, caractérisée en ce que la cloison rigide est portée par l'armature extérieure et comporte dans une zone centrale un élément de paroi mobile axialement entre deux butées, le conduit étant délimité dans la partie de la cloison comprise entre ladite zone centrale et la périphérie de cette cloison, la chambre de travail occupant une partie de l'intervalle entre les deux armatures et occupant un espace qui est délimité circonférentiellement par l'armature extérieure et qui est délimité axialement par un bout de l'armature intérieure et la cloison, tandis que la chambre d'expansion est située de l'autre côté de ladite cloison.

Suivant d'autres caractéristiques :
- la masse de matériau élastique comprend deux bras et des parois souples, qui s'étendent entre les deux armatures intérieure et extérieure et qui séparent le volume compris entre les deux armatures en deux zones dont l'une constitue la chambre de travail tandis que l'autre est mise à l'air libre;
- les deux zones sont obturées par des parois souples respectives, s'étendant entre les deux armatures et situées à des distances différentes de la cloison rigide;
- la paroi souple délimitant la chambre de travail est plus éloignée de la cloison que la paroi souple délimitant la chambre mise à l'air libre.

L'invention va être décrite plus en détail ci-dessous en se référant aux dessins annexés, donnés uniquement à titre d'exemples et sur lesquels :
La Fig. 1 est une vue en coupe longitudinale d'un mode de réalisation d'une articulation suivant l'invention;
La Fig. 2 est une vue en coupe suivant la ligne 2-2 de la Fig. 1;
La Fig. 3 est une vue schématique montrant un exemple d'implantation d'une telle articulation.

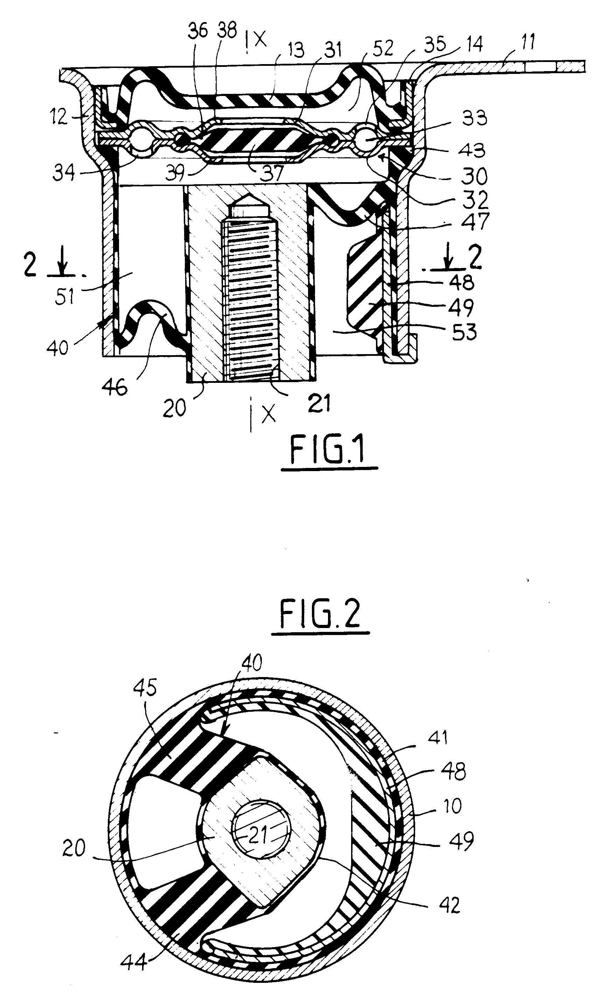

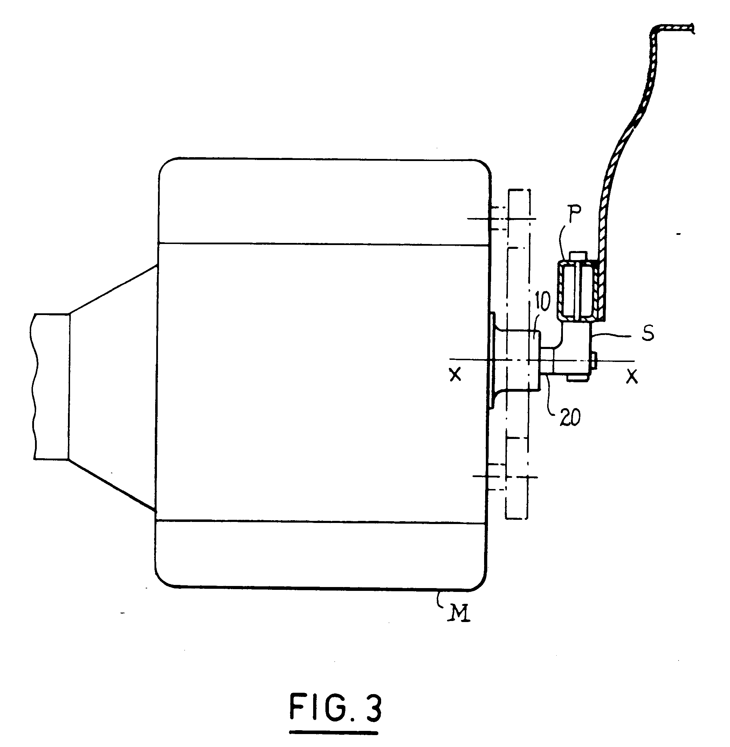

L'articulation représentée aux Fig. 1 et 2 est destinée à être interposée entre deux organes ou sous-ensembles, notamment dans un véhicule, dont les déplacements relatifs doivent être amortis. Comme représenté sur la Fig. 3, l'articulation peut être disposée entre un moteur M et une poutre P faisant partie de la structure du véhicule. L'articulation est disposée avec son axe X-X sensiblement horizontal et reliée à un support S lui-même fixé à la poutre P.

Cette articulation comprend deux armatures 10, 20 sensiblement coaxiales, destinées à être reliées aux deux organes ou sous-ensembles précités, ces deux armatures étant disposées en partie concentriquement l'une dans l'autre.

L'armature extérieure 10 a une forme tubulaire cylindrique terminée à une extrémité par une collerette ou par des pattes de fixation 11 tandis que l'armature intérieure 20, de forme cylindrique mais ayant en section la forme d'un losange curviligne, comporte un logement axial 21, par exemple fileté, ou tout autre moyen de fixation sur l'autre des organes à relier.

Au voisinage de son extrémité de fixation, l'armature extérieure 10 comporte une partie 12 de diamètre légèrement supérieur dans laquelle est reçue une cloison rigide 30 constituée dans l'exemple représenté par deux plaques embouties accolées 31, 32. Cette cloison 30 délimite un conduit 33 annulaire disposé au voisinage de sa périphérie, ce conduit débouchant de part et d'autre de la cloison par deux orifices 34 et 35 espacés circonférentiellement.

La cloison 30 délimite dans sa partie centrale un logement 36 débouchant sur ses deux faces, pour un élément de paroi mobile ou clapet 37 réalisé en élastomère. Ce clapet 37 est serré à sa périphérie entre les deux plaques 31, 32 et sa partie centrale peut débattre avec un jeu relativement faible entre deux sièges 38, 39 délimités par la cloison 30.

A sa partie supérieure, en considérant la figure 1, l'armature extérieure 10 reçoit une paroi souple 13, réalisée par exemple en élastomère, fixée à sa périphérie sur une armature légère 14, emmanchée à force dans l'armature extérieure 10.

De l'autre côté de la cloison rigide, une masse moulée 40 en élastomère est interposée entre les armatures 10, 20. Cette masse en élastomère comporte deux parois 41, 42 de faible épaisseur en contact respectivement avec les deux armatures concentriques, la paroi extérieure 41 étant terminée au voisinage de la cloison rigide par un bourrelet 43 qui assure l'étanchéité dans cette zone.

Comme cela est visible sur la Fig. 2, les deux parois concentriques sont reliées par deux bras 44, 45 s'étendant sur une hauteur correspondant à peu près à la longueur de recouvrement des deux armatures intérieure et extérieure. Ces deux bras sont agencés de façon à séparer le volume compris entre les deux armatures en deux zones ayant de préférence des sections inégales. La zone de plus petite section est fermée à son extrémité éloignée de la cloison rigide par une paroi souple 46 venue de moulage avec la pièce en élastomère.

Par contre c'est au voisinage de la cloison rigide que la zone de plus grande section est obturée par une paroi souple 47 également venue de moulage avec la pièce en élastomère.

On délimite ainsi de part et d'autre de la cloison rigide deux chambres 51, 52 remplies de liquide hydraulique, la chambre 51 constituant une chambre de travail tandis que la chambre 52 constitue une chambre d'expansion. Il est important que la chambre de travail 51 ne soit pas de révolution autour de l'axe X-X, mais au contraire dissymétrique par rapport à cet axe.

Quant au volume 53 délimité entre les deux armatures intérieure et extérieure, les bras 44, 45 et la paroi souple 47, il est mis directement en communication avec l'atmosphère.

Une butée comprenant une armature 48 et une masse en élastomère 49 est prévue dans le volume 53, l'armature 48 étant sertie sur le bord de l'armature extérieure 10.

Le fonctionnement d'un tel support est le suivant : lorsqu'une des deux armatures est soumise à des vibrations à haute fréquence et faible amplitude, ces dernières sont amorties par les déplacements de l'élément de paroi mobile 37. Compte tenu de la disposition de la cloison 30, portée par l'armature extérieure et décalée axialement par rapport à l'armature intérieure, cet élément de paroi mobile 37 peut avoir une grande surface, ce qui améliore l'effet de filtrage de ce type de vibrations.

Les débattements de plus grande amplitude entre les deux armatures sont amortis par le passage du fluide entre la chambre de travail 51 et la chambre d'expansion 52, comme cela est bien connu dans la technique. Le fait que la chambre de travail soit disposée de façon dissymétrique par rapport à l'axe X-X du support permet d'assurer un effet de pompage du liquide, en fonction des efforts radiaux auxquels le support est soumis.

La butée 49 limite les débattements entre les deux armatures et permet ainsi d'éviter un phénomène de cavitation qui pourrait se produire lors d'une augmentation de volume trop brutale et trop importante de la chambre de travail 51.

Il est à noter de plus qu'une telle articulation offre un encombrement radial plus faible que les supports de construction classique dont les axes sont sensiblement parallèles à la direction générale des efforts auxquels ils sont soumis.

## Revendications

1. Articulation hydroélastique comprenant deux armatures concentriques (10; 20) sensiblement coaxiales, constituant respectivement une armature extérieure (10) et une armature intérieure (20), ces deux armatures étant reliées par une masse (40) de matériau élastique, une cloison rigide (30) portée par l'une des armatures, qui s'étend sensiblement perpendiculairement à l'axe (X-X) des armatures et délimite au moins un conduit (33), l'articulation comportant deux chambres remplies de liquide , une chambre de travail (51) et une chambre d'expansion (52) qui communiquent à travers ledit conduit (33), la chambre de travail (51) occupant une partie de l'intervalle entre les deux armatures (10,20) et étant dissymétrique par rapport à l'axe (X-X) des armatures (10;20) **caractérisée en ce que** la cloison rigide (30) est portée par l'armature extérieure (10) et comporte dans une zone centrale un élément de paroi (37) mobile axialement entre deux butées, le conduit (33) étant délimité dans la partie de la cloison (30) comprise entre ladite zone centrale et la périphérie de cette cloison (30), la chambre de travail (51) occupant une partie de l'intervalle entre les deux armatures (10;20) et occupant un espace qui est délimité circonférentiellement par l'armature extérieure (10) et qui est délimité axialement par un bout de l'armature intérieure (20) et la cloison (30), tandis que la chambre d'expansion (52) est située de l'autre côté de ladite cloison (30).

2. Articulation selon la revendication 1, caractérisée en ce que la masse de matériau élastique (40) comprend deux bras (44, 45) et des parois souples (46, 47), qui s'étendent entre les deux armatures extérieure (10) et intérieure (20) et qui séparent le volume compris entre les deux armatures en deux zones dont l 'une constitue la chambre de travail (51) tandis que l'autre (53) est mise à l'air libre.

3. Articulation selon la revendication 2, caractérisée en ce que la paroi souple (46) délimitant la chambre de travail (51) est plus éloignée de la cloison (30) que la paroi souple (47) délimitant la chambre (53) mise à l'air libre.

4. Articulation selon l'une quelconque des revendications précédentes, caractérisée en ce qu'elle comporte une butée en élastomère (48, 49) limitant les débattements radiaux entre les deux armatures.

5. Articulation selon la revendication 4, caracterisée en ce que ladite butée est disposée dans la chambre (53) mise à l'air libre.

6. Articulation selon l'une quelconque des revendications précédentes, caractérisée en ce que la cloison (30) est disposée dans une partie d'extrémité de section élargie de l'armature extérieure (10).

## Patentansprüche

1. Hydrostatisches Gelenk mit zwei im wesentlichen koaxialen konzentrischen Gliedern (10; 20), die ein Außenglied (10) bzw. ein Innenglied (20) bilden, wobei die beiden Glieder durch eine Masse (40) aus elastischem Material verbunden sind, mit einer von einem der Glieder gehaltenen starren Trennwand (30), die sich im wesentlichen senkrecht zur Achse (X-X) der Glieder erstreckt und wenigstens einen Kanal (33) begrenzt, wobei das Gelenk zwei flüssigkeitsgefüllte Kammern aufweist, eine Arbeitskammer (51) und eine Expansionskammer (52), die über den Kanal (33) miteinander in Verbindung stehen, wobei die Arbeitskammer (51) einen Teil des Zwischenraums zwischen den beiden Gliedern (10, 20) einnimmt und unsymmetrisch bezüglich der Achse (X-X) der Glieder (10; 20) ist, dadurch gekennzeichnet, daß die starre Trennwand (30) vom äußeren Glied (10) gehalten wird und in einem zentralen Bereich ein zwischen zwei Anschlägen axial bewegliches Wandelement (37) aufweist, wobei der Kanal (33) in dem Teil der Trennwand (30) bestimmt ist, der zwischen dem zentralen Bereich und dem Rand dieser Trennwand (30) liegt, wobei die Arbeitskammer (51) einen Teil des Zwischenraums zwischen den beiden Gliedern (10; 20) einnimmt und einen Raum einnimmt, der im Umfang von dem Außenglied (10) und axial durch einen Abschnitt des Innengliedes (20) und die Trennwand (30) begrenzt ist, während die Expansionskammer (52) auf der anderen Seite der Trennwand (30) liegt.

2. Gelenk nach Anspruch 1, dadurch gekennzeichnet, daß die Masse aus elastischem Material (40) zwei Arme (44, 45) und weichelastische Wände (46, 47) aufweist, die sich zwischen dem Außenglied (10) und dem Innenglied (20) erstrecken und das zwischen den beiden Gliedern eingeschlossene Volumen in zwei Zonen trennen, von denen die eine die Arbeitskammer (51) bildet, während die andere (53) an freie Luft gesetzt ist.

3. Gelenk nach Anspruch 2, dadurch gekennzeichnet, daß die die Arbeitskammer (51) begrenzende weichelastische Wand (46) von der Trennwand (30) weiter entfernt ist als die die an freie Luft gesetzte Kammer (53) begrenzende weichelastische Wand (47).

4. Gelenk nach irgendeinem der vorstehenden Ansprüche, dadurch gekennzeichnet, daß es einen Elastomer-Anschlag (48, 49) aufweist, welcher die radialen Ausschläge zwischen den beiden Gliedern begrenzt.

5. Gelenk nach Anspruch 4, dadurch gekennzeichnet, daß der Anschlag in der an freie Luft gesetzten Kammer (53) angeordnet ist.

6. Gelenk nach irgendeinem der vorstehenden Ansprüche, dadurch gekennzeichnet, daß die Trennwand (30) in einem einen vergrößerten Querschnitt aufweisenden Endabschnitt des Außenglieds (10) angeordnet ist.

## Claims

1. Hydroelastic joint comprising two substantially coaxial concentric frames (10; 20), constituting respectively an outer frame (10) and an inner frame (20), these two frames being connected by a mass (40) of elastic material, a rigid partition (30) carried by one of the frames, which extends substantially at right angles to the axis (X-X) of the frames and defines at least one pipe (33), the joint having two chambers filled with liquid, a working chamber (51) and an expansion chamber (52), which communicate through the said pipe (33), the working chamber (51) occupying part of the gap between the two frames (10, 20) and being asymmetrical with respect to the axis (X-X) of the frames (10; 20), characterised in that the rigid partition (30) is carried by the outer frame (10) and has, in a central area, a wall element (37) able to move axially between two stops, the pipe (33) being delimited in the part of the partition (30) between the said central area and the periphery of this partition (30), the working chamber (51) occupying part of the gap between the two frames (10; 20) and occupying a space which is defined circumferentially by the outer frame (10) and which is defined axially by one end of the inner frame (20) and the partition (30), whilst the expansion chamber (52) is situated on the other side of the said partition (30).

2. Joint according to Claim 1, characterised in that the mass of elastic material (40) comprises two arms (44, 45) and flexible walls (46, 47), which extend between the two outer (10) and inner (20) frames and which separate the volume between the two frames into two areas, one of which constitutes the working chamber (51) whilst the other (53) is open to atmosphere.

3. Joint according to Claim 2, characterised in that the flexible wall (46) defining the working chamber (51) is further away from the partition (30) than the flexible wall (47) defining the chamber (53) which is open to atmosphere.

4. Joint according to any one of the preceding claims, characterised in that it includes an elastomer stop (48, 49) limiting the radial movements between the two frames.

5. Joint according to Claim 4, characterised in that the said stop is disposed in the chamber (53) which is open to atmosphere.

6. Joint according to any one of the preceding claims, characterised in that the partition (30) is disposed in an end part of the outer frame (10) which has a wider cross section.
